Europäisches Patentamt

European Patent Office

Office européen des brevets

(11) Numéro de publication: **0 042 315**
A1

(12) **DEMANDE DE BREVET EUROPEEN**

(21) Numéro de dépôt: 81400836.3

(22) Date de dépôt: 26.05.81

(51) Int. Cl.³: **B 06 B 1/18, A 01 F 15/00**

(30) Priorité: 28.05.80 FR 8011782

(43) Date de publication de la demande: 23.12.81
Bulletin 81/51

(84) Etats contractants désignés: **AT BE CH DE GB IT LI LU NL SE**

(71) Demandeur: **CENTRE NATIONAL DU MACHINISME AGRICOLE, DU GENIE RURAL, DES EAUX ET DES FORETS (CEMAGREF), Parc de Tourvole, F-92160 Antony (FR)**

(72) Inventeur: **Lucas, Jean, 83, Boulevard Saint Michel, F-75005 Paris (FR)**
Inventeur: **Drouin, Bernard, 2 Rue A. Briand, F-94250 Gentilly (FR)**
Inventeur: **Goupilion, Jean-François, 128, Rue Houdan, F-92330 Sceaux (FR)**

(74) Mandataire: **Lemonnier, André, Cabinet LEMONNIER 4, Boulevard Saint Denis, F-75010 Paris (FR)**

(54) **Procédé d'entretien d'un mouvement d'oscillation et application à une presse à paille.**

㊼ La présente invention concerne les dispositifs oscillants.

Dans le procédé pour entretenir le mouvement d'oscillation d'un dispositif oscillant 1 avec une source motrice fournissant une force supérieure à la force potentielle du dispositif oscillant au droit de ses points morts, la vitesse d'application de cette force étant inférieure à la vitesse du système oscillant dans la région entourant son point d'équilibre, on applique la force de la source motrice (3a, 3b, 4a, 4b) au dispositif oscillant 1 sur la partie de la trajectoire de ce dispositif oscillant précédant un point mort pour laquelle la vitesse d'application de la force de la source motrice est supérieure à la vitesse instantanée du dispositif oscillant.

La présente invention peut s'appliquer à une presse à paille.

Procédé d'entretien d'un mouvement d'oscillation, son application aux dispositifs oscillants à force d'entretien par
fluide hydraulique haute pression et presse, notamment presse
à pailles, comportant un tel dispositif oscillant.

La présente invention concerne les dispositifs oscillants
qu'ils soient du type pendulaire ou du type à rappel par un
élément élastique du type ressort ou masse gazeuse compressible et que le mouvement oscillant soit du type sinusoïdal
ou du type à course libre avec absorption,et restitution en
sens inverse,de l'énergie cinétique assurées sur une fraction, voisine du point mort, de la trajectoire.

Mécaniquement, le mouvement d'oscillation est amorti par les
forces de frottement sur les paliers, les surfaces de guidage
et/ou le milieu dans lequel se déplace l'organe
oscillant. Ce mouvement doit donc être entretenu en lui fournissant un travail compensant celui absorbé par les forces de
frottement. Ce travail est habituellement fourni dans les
mécanismes d'horlogerie bien connus par un mécanisme dit à
échappement ou par une bobine électromagnétique alimentée à
la fréquence d'oscillation. La caractéristique de ces mécanismes connus d'entretien du mouvement pendulaire est que la
transmission du travail assurant la compensation des frottements a lieu essentiellement dans les parties de la trajectoire situées au voisinage du point d'équilibre du dispositif
et est annulée au voisinage des points morts pour laisser le

2

0042315

dispositif osciller à sa fréquence propre. On rappellera que, dans un dispositif oscillant tel que ci-dessus, les forces de rappel vers le point d'équilibre sont maximales aux points morts correspondant à une déviation maximale et que les vitesses sont les plus élevées lorsque le dispositif oscillant passe par le point d'équilibre alors que la force de rappel s'annule en ce point. Donc pour transmettre un travail d'entretien du mouvement oscillant à un dispositif oscillant dans la zone du point d'équilibre, il faut que la vitesse d'application de la force dite d'entretien soit élevée et qu'elle soit au moins égale à la vitesse instantanée de l'organe récepteur solidaire de la masse oscillante. Dans un mécanisme à échappement la vitesse périphérique de la roue au point de contact avec le doigt pendulaire de l'échappement tend à être plus élevée que la vitesse d'oscillation instantanée de ce doigt.

Dans les dispositifs du type à course libre on exerce sur la masse pendant qu'elle parcourt à faible vitesse le début de sa trajectoire à partir d'un point mort, une force qui s'ajoute à celle exercée par le dispositif d'emmagasinage et de restitution de l'énergie cinétique.

Il est à remarquer en outre que si un travail, autre que celui résultant des forces de frottement, est demandé au dispositif oscillant, le mouvement d'oscillation ne se poursuit que si on l'entretient en introduisant dans le dispositif un travail équivalent à celui fourni.

Il est d'autre part connu d'utiliser l'énergie cinétique d'une masse pendulaire pour effectuer un travail par exemple dans les moutons pendulaires, mais ce mode d'utilisation ne correspond pas à un mouvement oscillant entretenu.

La présente invention a essentiellement pour but d'assurer, en utilisant l'énergie cinétique d'un dispositif oscillant, un travail dans lequel l'effort résistant est appliqué à la masse oscillante comme force de freinage sur une partie de la
trajectoire de cette masse oscillante voisine d'un point mort
et notamment dans lequel l'effort résistant croit au fur et
à mesure que la masse oscillante se rapproche dudit point
mort. Ceci est par exemple le cas lorsque la masse oscillante
est solidaire du piston de compression d'une masse compressible. En cas de retour élastique limité, c'est-à-dire lorsque
la masse compressible absorbe un travail dont elle ne restitue
élastiquement qu'une fraction, l'oscillation de retour sera
amortie et le point mort opposé tendra à se rapprocher du
point d'équilibre. Il est donc nécessaire de restituer à chaque oscillation,au dispositif oscillant le travail absorbé
par la compression de manière à maintenir l'amplitude du
mouvement oscillant constante. En outre l'énergie cinétique
emmagasinée dans la masse oscillante ne peut souvent correspondre en pratique qu'à une fraction du travail à fournir pour
la compression et le système oscillant n'atteindrait pas de
ce fait le point mort correspondant à la fin de la course de
compression. Il est donc nécessaire de fournir au système
oscillant, pendant la course utile, c'est-à-dire pendant la
course de compression, la fraction du travail de compression
qui correspond à la différence entre le travail de compression
total et l'énergie cinétique.

Un problème que l'invention a également pour but de résoudre
est celui de la compression sous pression élevée et à grande
vitesse d'une masse partiellement élastique de façon à récupérer partiellement la force de retour élastique. En effet les
sources motrices dont on dispose présentent une relation relativement constante entre la force utile et sa vitesse d'application, à savoir une force
élevée correspond à une vitesse d'application lente, et pour un type donné
de source motrice la vitesse d'application est limitée. A titre d'exemple
un moteur hydraulique ou un vérin hydraulique peuvent produire un couple
ou une force élevé  mais la vitesse étant proportionnelle au débit, la vitesse d'application est forcément limitée. Si la pompe d'alimentation est à
débit constant, au début du mouvement alternatif, la vitesse et donc le débit utiles croissent à partir de zéro et le débit excédentaire de la pompe
est laminé et représente un travail perdu. Dans un dispositif à mouvement alternatif entraîné par une telle source motrice tel qu'un dispositif oscillant auquel le travail fourni est restitué par un vérin hydraulique, la vitesse est limitée par la section du vérin déterminée par la force maximale à exercer par le vérin en fin de course utile.

La présente invention a pour but de remédier à ces inconvévients et de proposer un procédé pour entretenir le mouvement d'oscillation d'un dispositif oscillant avec une source motrice fournissant une force supérieure à la force potentielle du dispositif oscillant au droit de ses points morts, la vitesse d'application de cette force étant inférieure à la vitesse du système oscillant dans la région entourant son point d'équilibre, ce procédé étant caractérisé en ce qu'on applique la force de la source motrice au dispositif oscillant sur la partie de la trajectoire de ce dispositif oscillant précédant un point mort pour laquelle la vitesse d'application de la force de la source motrice est supérieure à la vitesse instantanée du dispositif oscillant.

On constatera qu'avec un dispositif oscillant à oscillation entretenue par le procédé selon cette première caractéristique de l'invention et à la différence des dispositifs oscillants entretenus classiques, la période n'est pas constante puisque la fin de la trajectoire, à savoir une fraction de cette trajectoire fonction du travail absorbé, est parcourue à une vitesse fonction de la source motrice mais l'énergie potentielle aux points morts est constante et indépendante du travail absorbé et, de plus, la fréquence est supérieure à celle d'un dispositif oscillant entretenu de la manière classique par compensation du travail absorbé dans la partie de la trajectoire entourant le point d'équilibre.

Selon un premier mode de réalisation la source motrice est mise hors d'action lorsque le dispositif oscillant atteint le point mort considéré, c'est-à-dire que le point mort où s'effectue l'inversion du mouvement d'oscillation est fixe.

Selon un deuxième mode de réalisation applicable notamment au cas où le dispositif oscillant fournit au cours de l'oscillation considérée un travail d'intensité variable tel que la compression sous une force de compression unitaire déterminée d'un volume variable d'une masse compressible, la source motrice est mise hors d'action lorsque la force motrice qu'elle exerce sur le dispositif oscillant atteint une valeur prédéterminée.

Selon une autre caractéristique le dispositif oscillant est piloté en fréquence, l'inversion de sens de la force exercée par la source motrice au droit d'un point mort, l'inversion comprenant l'annulation de cette force, étant effectuée à une fréquence inférieure à la fréquence naturelle d'oscillation du dispositif.

La présente invention a également pour objet l'application du procédé ci-dessus à un dispositif oscillant à force d'entretien par fluide hydraulique sous pression, application dans laquelle : la masse oscillante qui peut être une masse pendulaire ou une masse interposée entre deux éléments élastiques agissant en opposition, est associée rigidement avec des récepteurs de puissance hydrauliques tels que deux vérins hydrauliques ou un moyen équivalent tel qu'un vérin double effet, susceptibles d'exercer sur cette masse une poussée la ramenant vers chacun de ses points morts, supérieure à la force résistante qui lui est opposée, ces vérins étant mis sélectivement en communication contrôlée avec une source de fluide non compressible sous pression et pouvant aspirer avec un débit assurant leur gavage à la vitesse maximale de leur déplacement de volume instantané à partir d'une source du même fluide, et on alimente sélectivement celui des récepteurs exerçant une poussée vers le point mort terminal de l'oscillation en cours. Tant que le volume déplacé par le récepteur hydraulique, par exemple par le piston du vérin, est supérieur au débit de la source de fluide sous pression, ce récepteur est entraîné par l'énergie emmagasinée par le dispositif oscillant et le vérin aspire du fluide depuis la source de gavage mais, lorsque le débit fourni par la source motrice devient égal au débit absorbé par le récepteur hydraulique , la source d'huile sous pression accroît la pression dans le récepteur pour amener le dispositif oscillant jusqu'au point mort.

Conformément à l'invention l'alimentation du dispositif récepteur peut être interrompue et le dispositif mis à l'échappement soit lorsque le dispositif oscillant a atteint un point déterminé de sa trajectoire qui correspond au point mort fixe, soit lorsque la pression d'alimentation du récepteur hydraulique atteint une valeur préfixée , ce qui donne à cette extrémité de la trajectoire un point mort de position variable.

L'invention a également pour but de réaliser un dispositif oscillant, assurant notamment l'entraînement d'un piston de compression, dont la fréquence d'oscillation est très élevée. La vitesse du dispositif oscillant tel que ci-dessus dans la partie de la trajectoire où le dispositif oscillant n'est pas entraîné par le dispositif d'entretien de l'oscillation dépend de la valeur de la force de rappel .. En conséquence et selon une autre caractéristique de l'invention au moins une partie de la force de rappel du dispositif oscillant est fournie par un moyen élastique bandé au moins pour partie par le dispositif d'entretien de l'oscillation. Ceci est notamment le cas au droit du point mort correspondant à la course de compression. Selon une autre caractéristique la capacité d'emmagasinage d'énergie du moyen élastique est supérieure à l'énergie cinétique du dispositif oscillant. Avec cette caractéristique et avec le procédé d'entretien du mouvement oscillant conforme à l'invention, on emmagasine au droit du point mort, dans le dispositif oscillant, un travail supplémentaire qui pourra être restitué au cours de l'oscillation suivante.

Dans l'application pratique à un dispositif oscillant à force d'entretien par fluide hydraulique sous pression, au moins une partie de l'énergie cinétique du dispositif oscillant est absorbée, au moins en fin d'oscillation dudit dispositif, et restituée, dans la partie initiale de l'oscillation suivante, par un ressort qui est de préférence constitué par un récepteur hydropneumatique. Ce dispositif emmagasine en fin d'oscillation une énergie potentielle qui est fournie par le récepteur et accroît la vitesse d'oscillation du dispositif. Dans le cas d'une course d'oscillation fournissant un travail, par exemple une course de compression, le travail correspondant à l'énergie potentielle emmagasinée doit être fourni, par le récepteur hydraulique, au dispositif oscillant, en plus du travail nécessaire à l'entretien du mouvement, la force utile de compression étant égale à la force exercée par le récepteur hydraulique diminuée de la force de réaction du récepteur hydropneumatique. Ceci ne présente toutefois pas d'inconvénient mais au contraire des avantages car la force de poussée du récepteur hydraulique est très supérieure à la valeur de la force de réaction du récepteur hydropneumatique nécessaire pour obtenir une vitesse d'oscillation élevée et le travail emmagasiné est restitué sous forme d'énergie cinétique, dans la partie de la période de fonctionnement où la compression est assurée, par la seule énergie cinétique du dispositif oscillant dont la vitesse est supérieure à la vitesse d'application de la force du récepteur hydraulique.

Le procédé d'entretien d'un mouvement d'oscillation et son application aux dispositifs oscillants à force d'entretien par fluide hydraulique haute pression conformément à l'invention, présentent un intérêt particulier dans le cas des presses à pailles mobiles utilisées pour collecter la paille rassemblée en andains sur le sol après la moisson et la comprimer sous forme de bottes de paille.

Les presses généralement utilisées à l'heure actuelle compriment la paille sous forme de bottes parallélépipédiques ayant un poids d'une trentaine de kilogs, la densité volumique étant, pour les bottes obtenues avec des presses haute densité, de 100 à 150 kg/m$^3$. Ces bottes n'ont pas une résistance mécanique propre notable et elles doivent être ligaturées.

La situation actuelle a amené à envisager de récupérer les pailles qui sont souvent brûlées sur le champ, en vue soit de l'alimentation des animaux, soit comme matière première pour la fabrication du papier ou de panneaux d'isolation thermique, soit enfin comme combustible ou matière première énergétique. Ces divers usages nécessitent un transport des bottes de pailles sur des distances qui peuvent être importantes, de sorte que le coût de la manutention et du transport à une incidence importante sur le prix de revient de la matière première. La densité relativement faible des bottes de paille actuelles fait que le chargement des camions et autres moyens de transport est limité par le volume et non par la charge utile, ce qui accroît le coût du transport. La fragilité mécanique relative des bottes en rend la manipulation délicate ce qui accroît le coût des opérations de chargement et de déchargement et nécessite de toutes façons le ficelage des bottes avec un lien résistant dont le prix influe également sur le prix de revient.

Un autre problème qui se pose en ce qui concerne la presse elle-même est la nécessité d'avoir une presse mobile susceptible de se déplacer sur le champ et comportant les dispositifs de ramassage et d'alimentation car, en raison de la dispersion géographique, de la faible densité et de la faible valeur économique de la matière à traiter, on ne peut envisager le ramassage et le transport de la paille jusqu'à une installation fixe.

Des considérations économiques obligent enfin à avoir une presse susceptible de conditionner environ 10 tonnes de paille à l'heure.

Pour résoudre ces problèmes on a cherché à réaliser une presse produisant des blocs de paille ayant une très haute densité de l'ordre de 500 kg/m$^3$ et un volume réduit inférieur à 0,01 m$^3$ , le poids du bloc variant en fonction de la densité de l'andain, mais la masse volumique étant maintenue aussi constante que possible. De tels blocs de paille présentent l'avantage d'avoir une bonne résistance mécanique, ce qui évite la nécessité du lien et permet leur manipulation et leur transport en vrac.

Cette solution exige toutefois, du fait du rendement considéré comme économiquement indispensable, une production d'environ un bloc par seconde. Ceci, ajouté au fait que la paille comprimée en blocs se détend après la compression et que, pour obtenir une densité volumique de 500 kg/m$^3$ , il faut comprimer suivant la courbe de compression d'allure hyperbolique du produit jusqu'à environ 1000 kg/m$^3$ sous une pression pouvant atteindre 300 à 400 bars, fait que la presse doit tout à la fois fonctionner à une fréquence très élevée, avec une vitesse élevée au moins pendant la première phase de la compression et utiliser un dispositif d'entraînement assurant une force de poussée extrêmement élevée.

Les presses connues agissant par compression dans une canalisation formant filière sont d'un débit trop faible et nécessitent, d'une part, un hachage préalable de la paille et, d'autre part, trop de puissance du fait des frottements internes. Les presses du type à piston de compression, le piston de compression étant actionné par un vérin , sont également connues et l'on a déjà proposé de combiner des pistons agissant successivement dans deux directions sur la même masse de manière à la comprimer pour réaliser des blocs. Ces presses ne sont toutefois pas utilisables dans le cas de la présente invention en raison de l'incompatibilité ci-dessus exposée entre une vitesse de fonctionnement et une force de compression élevées.

Le procédé conforme à la présente invention permet d'atteindre ces résultats du fait que la presse conforme à l'invention est caractérisée en ce que la phase initiale du travail de compression est assurée par l'énergie cinétique potentielle emmagasinée, au cours de la course de recul du piston de la presse ,dans un accumulateur élastique, la phase finale du travail de compression étant assurée par un dispositif d'entraînement assurant une force de poussée élevée à vitesse d'application réduite.

Selon une autre caractéristique qui permet d'accroître la vitesse de la course de recul, un accumulateur élastique est bandé en fin de course de compression par le dispositif d'entraînement assurant une force de poussée élevée à vitesse d'application réduite, l'énergie emmagasinée dans cet accumulateur élastique étant restituée au dispositif oscillant au début de la course de recul. Cette énergie restituée laissant subsister une énergie résiduelle en fin de course de recul, cette énergie résiduelle est emmagasinée, avec addition éventuelle d'une énergie supplémentaire fournie par le dispositif d'entraînement,dans un accumulateur élastique bandé en fin de course de recul, l'énergie emmagasinée dans cet accumulateur élastique étant restituée au dispositif oscillant au début de la course de compression.

La presse étant une presse automotrice qui se déplace sur le champ, il est essentiel d'assurer son équilibrage dynamique. Cet équilibrage dynamique est assuré par le fait que la masse du piston et des éléments associés est équilibrée par une masse d'équilibrage dont le déplacement est lié à celui de la masse du piston par une transmission non élastique de façon que les barycentres du piston et des éléments associés, d'une part, et de la masse d'équilibrage, d'autre part, donnent un barycentre de l'ensemble qui est à peu près fixe. Avec ce mode de réalisation et dans le cadre du procédé conforme à l'invention la masse d'équilibrage rentre dans la cinématique du dispositif oscillant et son énergie cinétique s'ajoute à celle du piston et des éléments associés.

Il est bien évident que des dispositifs connus de transformation de mouvement peuvent être interposés entre le piston de compression, le dispositif d'entraînement et/ou l'accumulateur élastique pour modifier les caractéristiques géométriques, cinématiques et/ou dynamiques des divers organes. Ceci est le cas notamment du dispositif à deux bielles articulées à genouillère, l'ouverture et la fermeture de la genouillère étant commandées par un vérin hydraulique.

En raison de la faible densité de la paille à l'état ramassée par les dispositifs de ramassage usuels, la compression recherchée pour la presse à pailles conforme à l'invention doit être effectuée en au moins deux stades et la presse proprement dite est, de manière connue, du type à deux stades de compression selon deux directions sensiblement perpendiculaires.

En conséquence et selon un mode de réalisation, la presse à pailles conforme à l'invention comporte comme éléments principaux un bâti porteur automoteur ou tractable, un dispositif de ramassage de la paille et d'alimentation de la paille à la presse proprement dite, une presse proprement dite du type à deux stades de compression selon deux directions sensiblement perpendiculaires et un dispositif éjecteur, la presse proprement dite étant caractérisée en ce que chaque élément assurant un stade de compression est constitué par un piston de compression à mouvement pendulaire commandé par un dispositif à deux bielles articulées à genouillère, l'ouverture et la fermeture de la genouillère étant commandées par un vérin hydraulique selon la disposition dite à quatre barres, la commande par le vérin étant du type à accumulation et restitution de l'énergie, l'articulation centrale de la genouillère dépassant, au cours du retour arrière du piston, la ligne d'axes passant par les deux points fixes d'articulation de la genouillère et du vérin, en emmagasinant l'énergie dans un accumulateur qui la restitue au système dans la partie initiale de la course vers l'avant du piston du vérin.

Selon une autre caractéristique l'accumulateur est du type hydropneumatique et est en communication avec la chambre opposée à la chambre active du vérin.

Dans ce mode de réalisation le dispositif de commande du piston de compression comporte trois points fixes sur le bâti, savoir l'articulation du bras pendulaire portant le piston, l'articulation de l'embiellage à genouillère dont l'articulation opposée est solidaire du bras pendulaire portant le piston et l'articulation du vérin dont l'autre extrémité est articulée sur l'articulation centrale de la genouillère.

Selon une caractéristique les positions relatives de l'articulation du vérin et de l'articulation, sur le châssis, de l'embiellage à genouillère et les longueurs du bras pendulaire et des bielles de l'embiellage à genouillère sont telles qu'en fin de course de compression la ligne d'action du vérin se trouve sensiblement en coincidence avec là bissectrice de l'angle de la genouillère. Cette disposition permet de réduire la section du vérin donc le volume engendré et le débit de la pompe haute pression.

Selon une autre caractéristique de l'invention le système de barres constitué par les embiellages et le vérin est isostatique, c'est-à-dire s'auto-positionne, les deux articulations aux extrémités du vérin et l'articulation de la bielle sur le piston étant des articulations à rotule. Il en résulte l'intérêt que les barres et le vérin ne sont soumis qu'à des sollicitations de traction ou de compression sans torsion ou flexion.

Cette solution dans laquelle l'articulation de la genouillère et l'articulation du vérin sur la genouillère sont confondues permet, comme dans le cas où les deux articulations sont alignées selon un axe perpendiculaire aux lignes d'action des trois éléments de croiser les barres, c'est-à-dire d'obtenir le débattement nécessaire pour le fonctionnement avec accumulation et restitution de l'énergie à la fin de la course de retour et au début de la course de compression.

Du fait que le point mort arrière des pistons de compression est atteint, en raison du procédé mis en oeuvre , au cours d'une course d'allongement du vérin de commande, lorsque le piston a une section importante comme le vérin du second étage, le vérin peut caviter dans la partie arrière de sa course et le point mort arrière du piston pourrait ne pas être atteint. Pour y remédier on prévoit un vérin secondaire qui agit sur l'embiellage dans la direction inverse du mouvement assurant la compression pour ramener le système en position d'accumulation maximale d'énergie.

Selon une autre caractéristique, l'équilibrage dynamique de la presse est assuré pour chaque étage de compression par une masse suspendue au bâti de façon pendulaire autour d'un axe parallèle aux axes du système à quatre barres de l'étage de compression et entraînée par un embiellage, à partir de l'embiellage de commande du piston de compression, pour avoir à tout moment une direction de déplacement opposée à la direction de déplacement du barycentre des masses du dispositif de compression de l'étage. Le rayon de déplacement de la masse est déterminé par le calcul pour améliorer le couple d'inertie. Selon un mode de réalisation préférentiel la masse d'équilibrage est suspendue par un bras pendulaire ayant un axe coplanaire avec l'axe d'articulation du piston de compression et la rotule du vérin, ce bras étant entraîné par une bielle de liaison articulée à l'extrémité d'une manivelle constituée par un prolongement de la manivelle du système de compression.

Selon une autre caractéristique le dispositif d'éjection du bloc comprimé hors de la chambre de compression du deuxième étage de compression est constitué par un plateau venant au repos fermer la paroi inférieure de cette chambre, ce plateau étant porté par un bras monté oscillant autour d'un axe parallèle aux axes d'articulation du deuxième étage de compression, ce bras oscillant étant entraîné dans la direction assurant l'éjection, depuis l'axe d'oscillation du piston du premier étage de compression, par un bras radial solidaire de cet axe dont l'extrémité est reliée au bras oscillant de l'éjecteur par une bielle télescopique dont l'allongement est contrôlé par un système de détente autorisant cet allongement après une première fraction de la course de compression du premier étage, l'éjecteur étant rappelé élastiquement en position de repos avec un allongement concomitant de la bielle télescopique. Selon un mode de réalisation préférentiel la détente est constituée par un galet fixé à l'extrémité de la tige de la bielle et coopérant avec une came d'arrêt solidaire du fût de la bielle, la came étant dégagée par réduction de l'angle entre le bras radial et la bielle télescopique, le réenclenchement s'effectuant en fin de course de retour du piston de compression du premier étage.

Selon une autre caractéristique, le dispositif de chargement de la paille dans la chambre de compression du premier étage comprend une paroi mobile déplaçable sur le plateau d'amenée de la paille, alimentée sur ce plateau par tout dispositif connu, perpendiculairement à la trajectoire du piston de compression du premier étage, le déplacement de cette paroi mobile étant guidé par une came à aiguillage et assuré par une tige sensiblement parallèle à sa direction de déplacement qui en est rigidement solidaire et par une manivelle articulée autour d'un axe perpendiculaire à cette direction de déplacement, l'entrainement étant assuré par une bielle oblique agissant entre des points intermédiaires de ladite manivelle et du bras du piston de compression du premier étage en coopération avec un dispositif de rappel élastique de la paroi mobile sur la partie supérieure de guidage en retour de la came. Avec ce mode de réalisation la paille est chargée dans la chambre de compression pendant le mouvement de retour du piston de compression du premier étage. De préférence la paroi mobile est constituée par des dents réunies par une traverse supérieure.

D'autres caractéristiques de la présente invention apparaîtront à la lecture de l'explication du procédé objet de l'invention, de la description détaillée d'un mode de réalisation de la presse à pailles à très haute densité et de la description d'une variante de réalisation représentée schématiquement faite ci-après avec référence aux dessins ci-annexés dans lesquels :

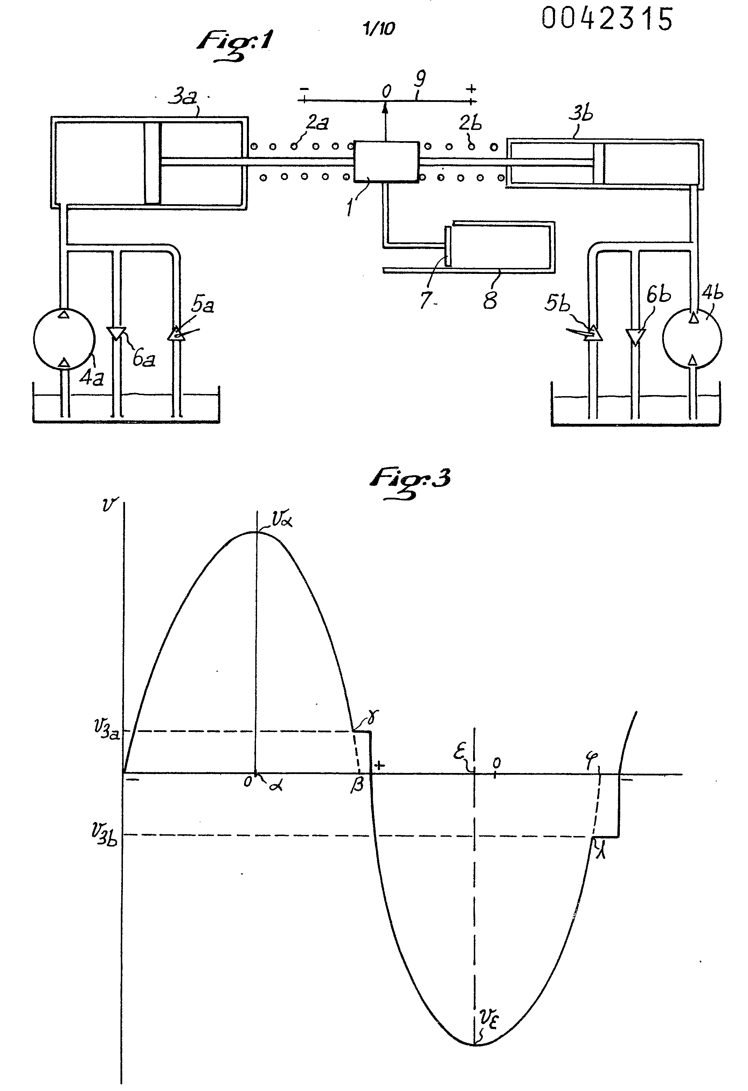

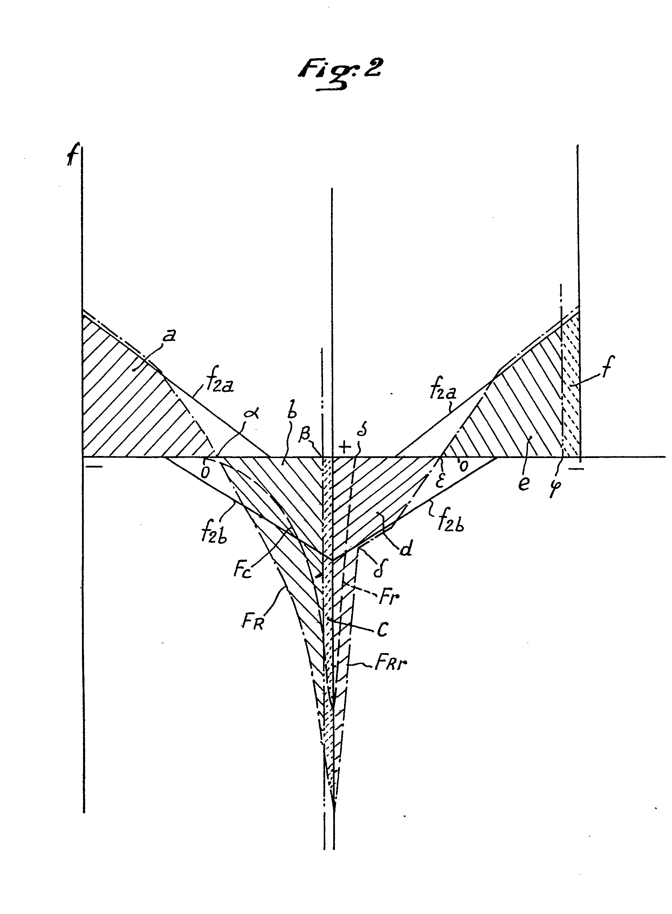

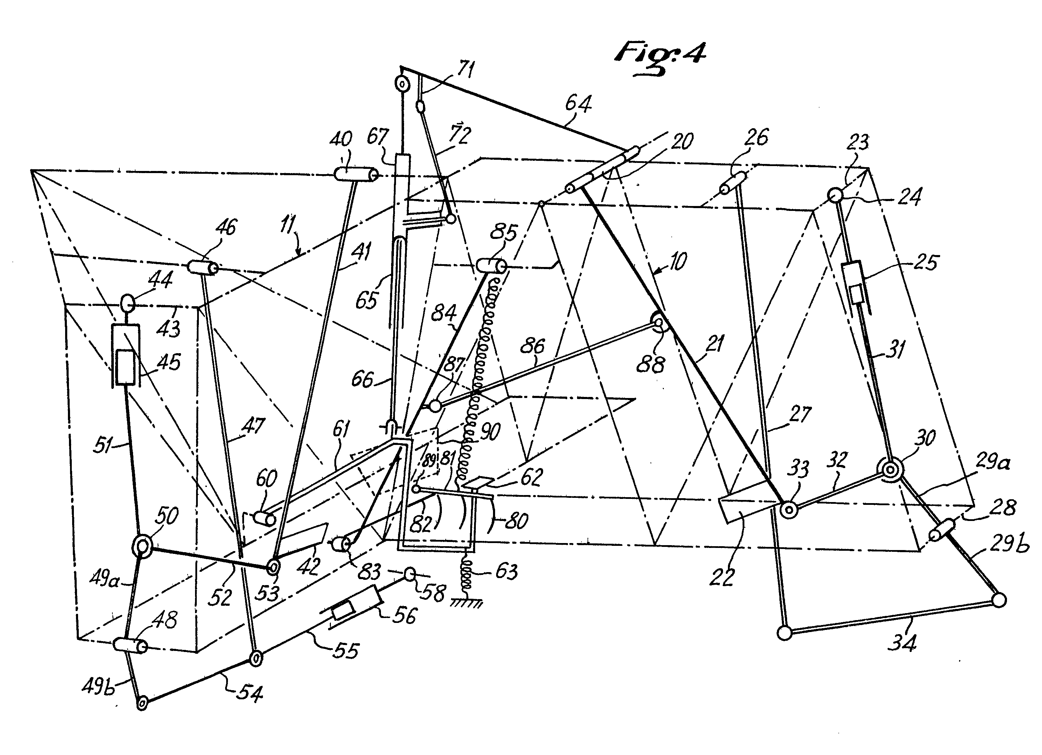

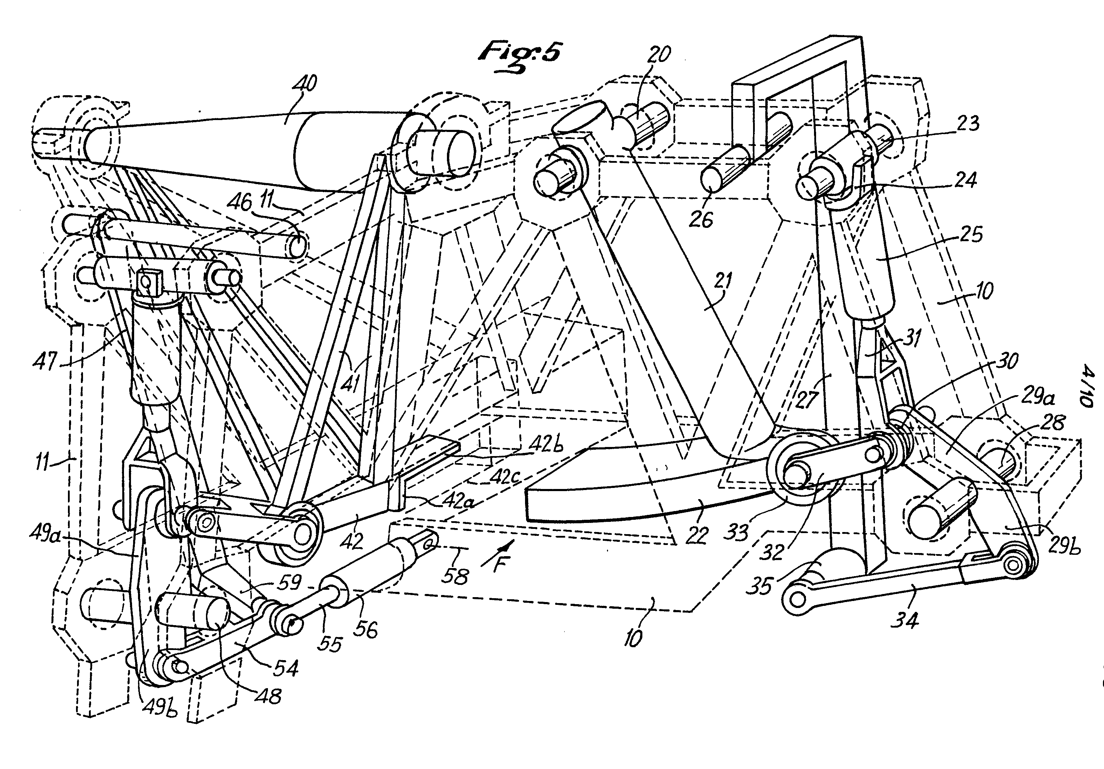

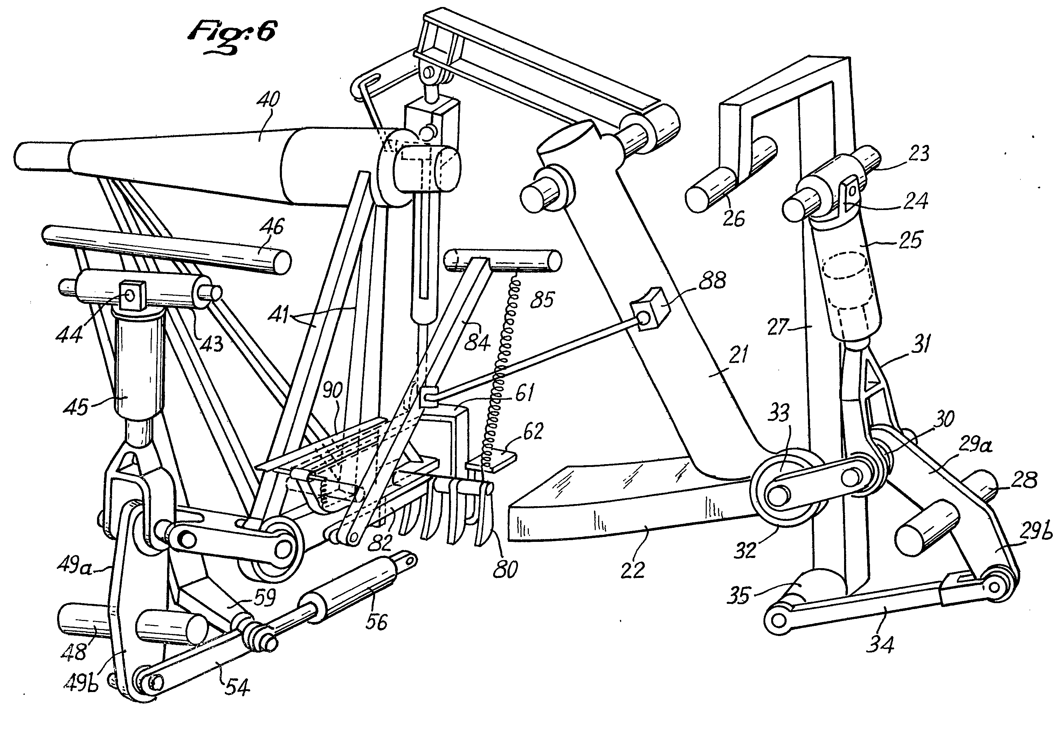

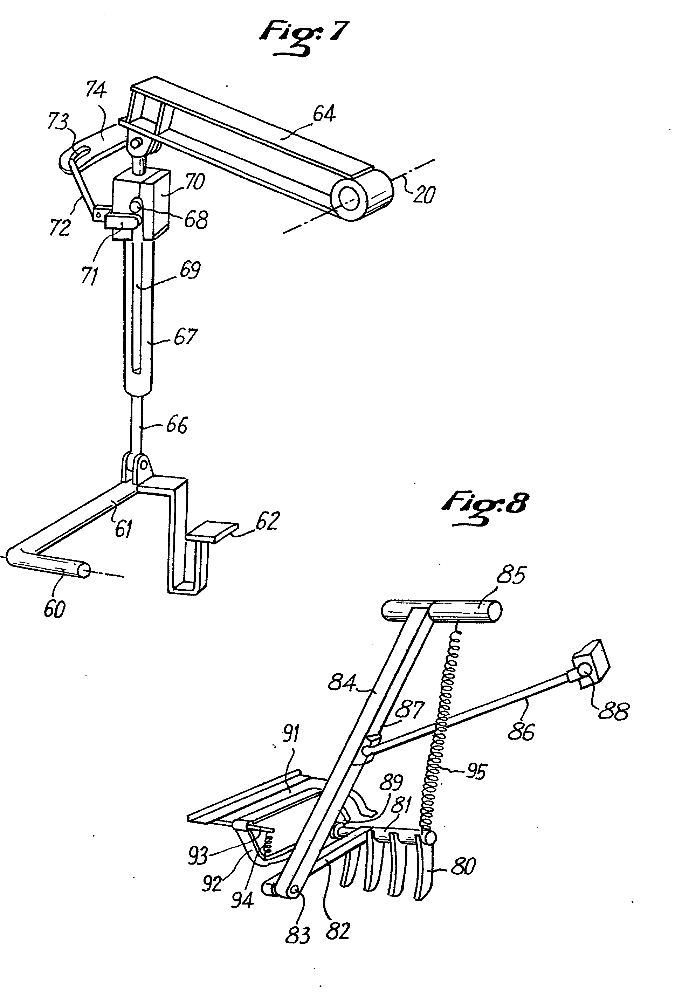

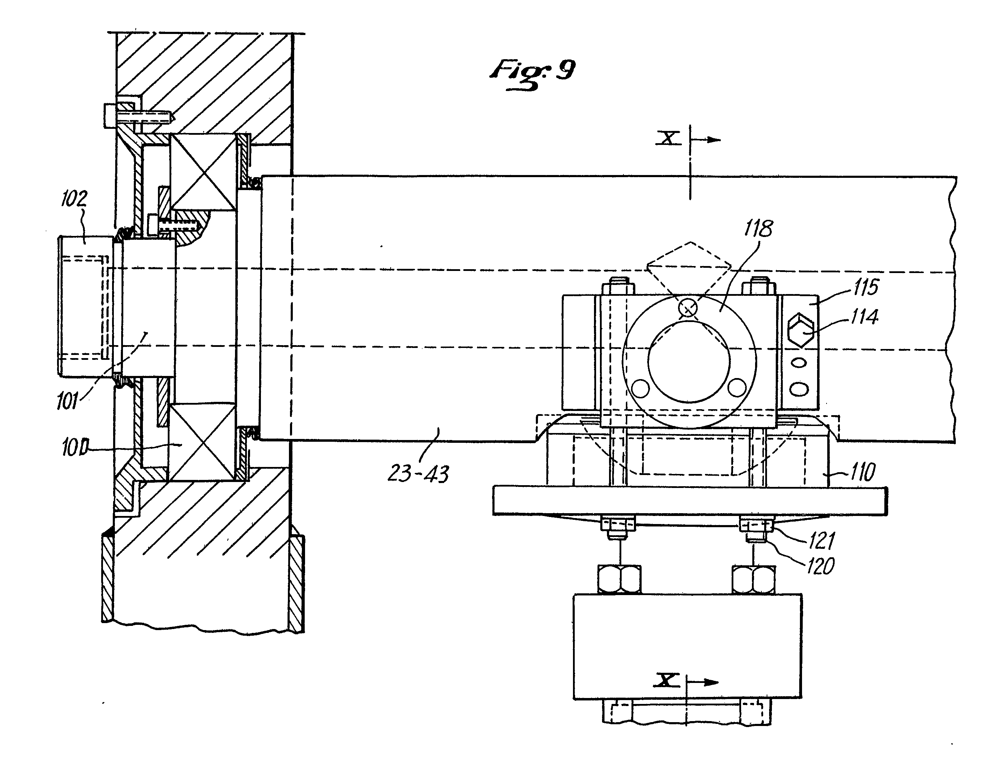

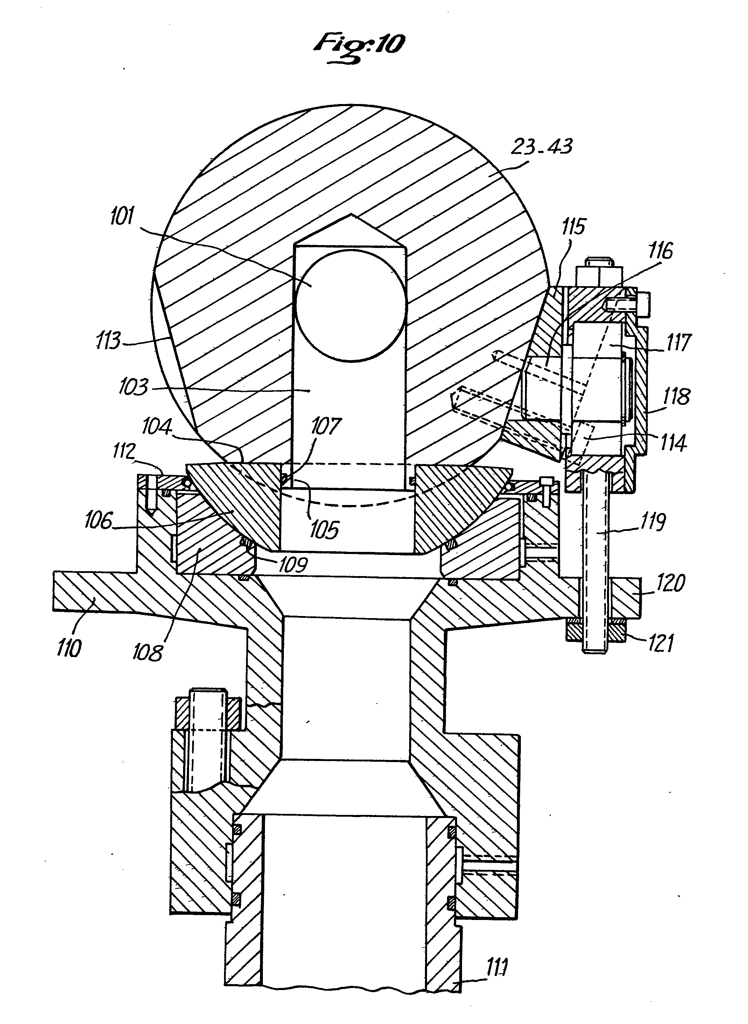

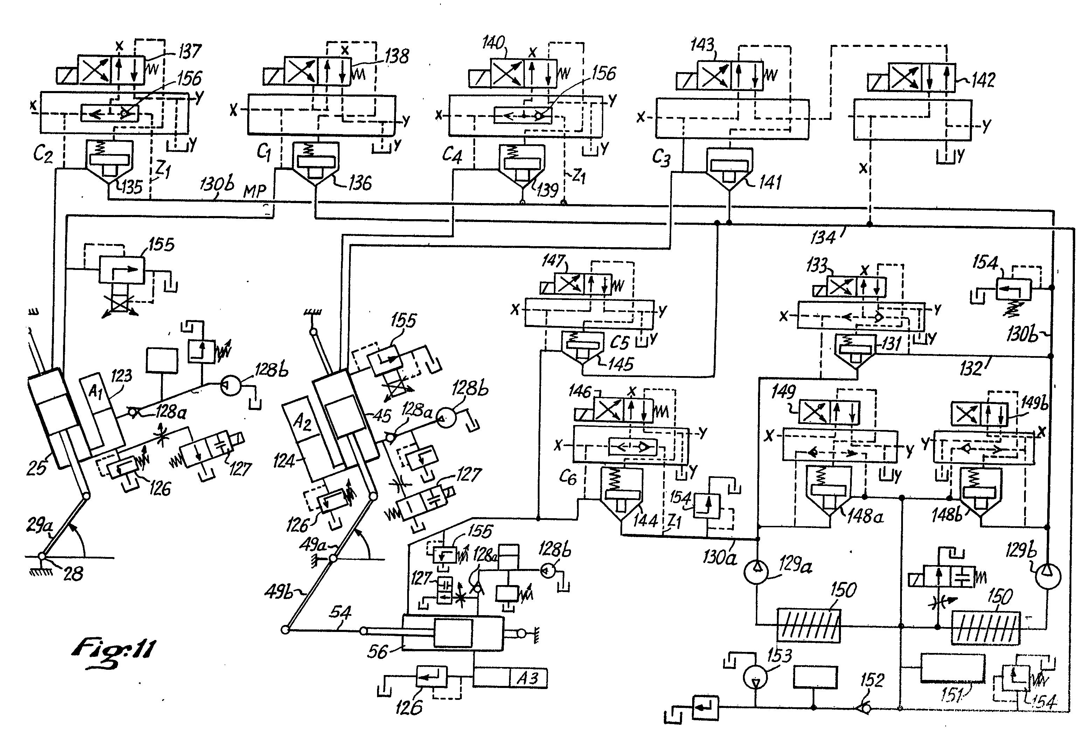

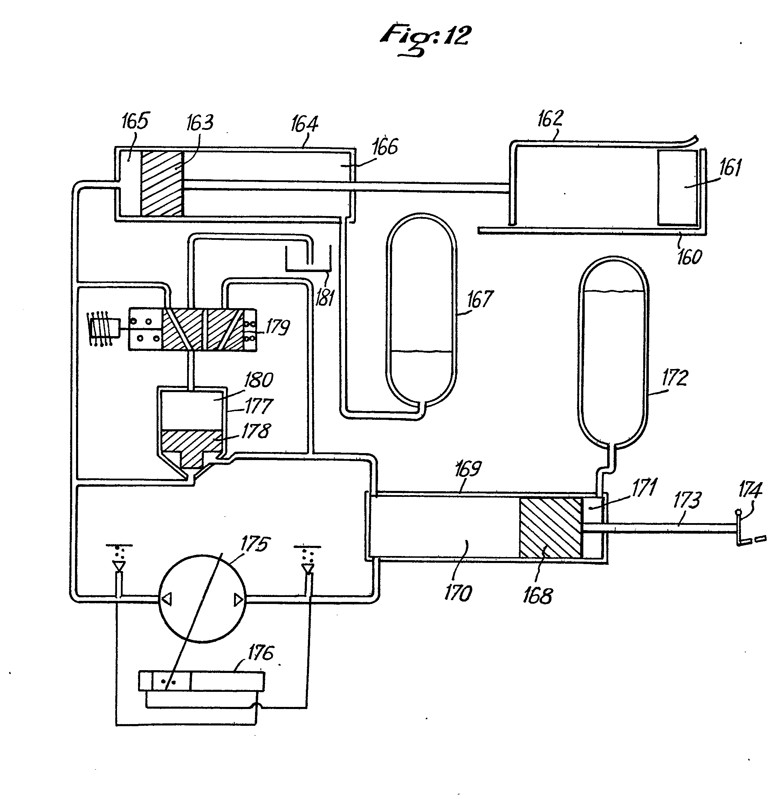

La figure 1 est un schéma d'un dispositif oscillant entretenu par le procédé conforme à l'invention; la figure 2 est un graphique des forces agissant dans ce dispositif oscillant; la figure 3 est un graphique des vitesses; la figure 4 est un schéma d'ensemble destiné à expliquer la cinématique générale de la presse à paille à très haute densité selon un mode de réalisation conforme à l'invention; la figure 5 est une vue en perspective des éléments mécaniques constituant les deux étages de compression, les éléments du bâti étant représentés en tiretés; la figure 6 est une vue en perspective le bâti étant supprimé des éléments mécaniques constituant les deux étages de compression, le dispositif d'éjection et le dispositif de chargement de la paille; la figure 7 est une vue de détail du dispositif éjecteur; la figure 8 est une vue de détail, du dispositif d'amenée de la paille; la figure 9 est une demi-vue en élévation du montage du vérin sur son axe haut; la figure 10 est une vue en coupe par X-X de la figure 9; la figure 11 est un schéma du circuit hydraulique et la figure 12 est un schéma d'une variante de réalisation d'un étage de la presse à paille.

Le dispositif oscillant de la figure 1 se compose schématiquement d'une masse oscillante 1 suspendue entre deux ressorts 2a , 2b et solidaire des pistons de deux vérins 3a et 3b agissant en opposition sur la masse. Chaque vérin est alimenté par une pompe 4a , 4b et peut être mis à l'échappement par une vanne commandée 5a , 5b. Les pompes sont court circuitées par un by-pass contrôlé par une soupape anti-retour 6a - 6b. La masse 1 est solidaire du piston de compression 7 d'une presse matérialisée par la chambre de compression 8 qui est par exemple une presse à pailles. L'étude du fonctionnement de ce système oscillant sera fait à l'aide de graphiques dont les abscisses correspondent à la position de la masse 1 repérée sur l'échelle 9, les valeurs positives des forces et des vitesses correspondant à la flèche de cette échelle.

Dans le graphique de la figure 2 on a représenté par $f_{2a}$ la force exercée par le ressort 2a , par $f_{2b}$ la force exercée par le ressort 2b , par Fc en tireté la force de compression et par Fd en tireté la force de détente de la masse de paille comprimée , $F_R$ en traits mixtes représente la résultante des forces du système oscillant appliquées à la masse 1. La direction de déplacement de la masse 1 est positive de (-) à (+) puis négative de (+) à (-) et redevient positive de (-) à (+). Pour faciliter le graphique les ordonnées de la courbe Fc Fd ont été réduites mais le rapport exact entre le travail fourni et l'énergie cinétique emmagasinée, à savoir le travail potentiel emmagasiné dans le dispositif oscillant, n'est pas à prendre en compte pour l'explication du fonctionnement.

Si on considère la figure 2 et le système soumis à la seule force résultante FR, en voit que jusqu'au point α le dispositif oscillant est soumis à une force positive de même sens que son déplacement due essentiellement au travail emmagasiné dans le ressort 2a. Sa vitesse va donc croître à partir de la vitesse zéro au point (-) jusqu'à la vitesse maximale Vα (Figure 3). Le dispositif oscillant va avoir une énergie cinétique correspondant à la surface hachurée a. A partir du point α le dispositif oscillant va être soumis, notamment, à la force de compression $f_{2b}$ du ressort 2b et, à la force de compression Fc de la masse de paille dans la chambre 8, force dont la courbe a une allure hyperbolique, la résultante étant une force résistante s'opposant au mouvement. La vitesse du dispositif oscillant va décroître et si aucune force d'entretien n'était appliquée au système la vitesse s'annulerait au point β auquel l'aire hachurée b qui représente le travail fourni par le système est égale à l'aire a. Pour atteindre le point (+), il faut fournir au système un travail correspondant à l'aire c hachurée en pointillés. On constate d'après la figure 2 que ce travail s'effectue contre une force résistante FR élevée. En ce qui concerne les vitesses et comme représenté dans la figure 3, dès que la vitesse de déplacement du piston 3a multipliée par la section de ce piston devient inférieure au débit total, la soupape 6a par laquelle le vérin aspirait à la bâche se ferme et la pompe débite dans la chambre en lui imposant une vitesse minimale $v_{3a}$. A partir du point γ (Figure 3) et jusqu'au point mort (+) correspondant à la fin de la compression la presse va être actionnée non plus par l'énergie cinétique du système oscillant mais par le vérin hydraulique.

Pendant la course de recul la masse de paille comprimée dans la chambre 8 par le piston 7 se détend selon la courbe $F_2$ en restituant au système une certaine énergie. A l'origine du mouvement de recul du dispositif celui-ci est soumis à la force $F_r$ et à la force $f_{2b}$ de compression du ressort 2b puis à partir du point δ à la seule force du ressort 2b à laquelle vient progressivement s'opposer la force de compression $f_{2a}$ du ressort 2a. En fait les forces appliquées au système sont en équilibre au point ε auquel correspond la vitesse de recul $v_ε$ maximale. A partir de ce point la force $F_{Rr}$ étant positive, c'est-à-dire opposée au mouvement de recul, la vitesse décroît pour s'annuler au point φ correspondant à l'égalité des aires d et e. Il est à remarquer ici que si les deux ressorts 2a et 2b avaient les mêmes caractéristiques élastiques et du fait qu'une énergie de détente de la paille est restituée au système au début du mouvement de recul, le point φ, abstraction faite des frottements, se trouverait au-delà du point (-).Pour revenir au même point mort il faudrait dissiper cette énergie et si la pente de $f_{2a}$ était la même que celle de $f_{2b}$, l'aire a serait plus petite et donc l'aire c serait plus grande. On peut adopter un ressort 2a moins élastique que le ressort 2b de manière que le point $\phi$ soit atteint avant le point mort (-). Pendant cette course de recul la vanne 5a est ouverte de sorte que le vérin 3a refoule à la bâche et le vérin 3b aspire à la bâche par la soupape 6b jusqu'au moment où la vitesse du système oscillant multipliée par sa section devient inférieure au débit de la pompe 4b (vitesse $v_{3b}$ à la figure 3). A partir de ce moment le dispositif oscillant est entraîné par le vérin 3b qui lui fournit le travail représenté par l'aire hachurée en tiretés f (Figure 2). Le vérin 3b ayant à fournir au système une force plus faible que le vérin 3a il peut être de plus petite section et du fait que les pompes 4a et 4b peuvent être constituée par la même pompe avec commutation des connexions, la vitesse $v_{3b}$ sera supérieure à $v_{3a}$ .

On voit donc qu'avec le procédé conforme à l'invention les vitesses sont beaucoup plus élevées que celles que permettent d'obtenir les systèmes hydrauliques et sont au moins égales à ces vitesses pendant les périodes où il y a apport de travail par les vérins hydrauliques, la force de compression réalisable est beaucoup plus élevée que celle que pourrait assurer un dispositif à inertie du type oscillant, et enfin on peut récupérer l'énergie de détente de la paille comprimée et accroitre l'énergie potentielle du dispositif respectivement au début et à la fin (aire f) du mouvement de recul.

On décrira maintenant la cinématique d'ensemble d'un premier mode de réalisation de la presse avec référence à la figure 4 dans laquelle les éléments du bâti ont été représentés en traits mixtes. Cette presse est du type à dispositifs oscillants pendulaires. Le bâti comporte un premier ensemble 10 dont l'orientation est parallèle à la direction de déplacement de la machine et un deuxième ensemble 11 dont l'orientation d'ensemble est perpendiculaire à celle de l'ensemble 10.

L'ensemble de bâti 10 correspond au premier étage de compression et il porte un certain nombre d'axes qui sont perpendiculaires à sa direction d'orientation savoir,dans son plan supérieur,l'axe 20 d'articulation du bras de suspension 21 du piston pendulaire 22,l'axe 23 auquel est suspendu,par une rotule 24 qui sera décrite plus en détail ci-après,le vérin 25 du premier étage de compression et un axe 26 d'articulation du bras pendulaire 27 de la masse d'équilibrage dynamique et, à sa partie inférieure avant, l'axe 28 d'articulation de la manivelle 29 de l'embiellage qui est un fléau à deux bras 29a, 29b. A l'extrémité du bras 29a sont articulées,par une rotule 30, l'extrémité de la tige 31 du vérin 25 et une bielle 32 dont l'autre extrémité est articulée par une rotule 33 à l'extrémité du bras pendulaire 21 du piston 22. A l'extrémité du bras 29b est articulée une bielle 34 dont l'autre extrémité est articulée à l'extrémité libre du bras pendulaire 27 de la masse d'équilibrage.

L'ensemble du bâti 11 correspond au deuxième étage de compression et il porte de même un certain nombre d'axes qui sont perpendiculaires à sa direction d'orientation savoir, dans son plan supérieur, l'axe 40 d'articulation du bras de suspension 41 du piston pendulaire 42 assurant la compression du deuxième étage, l'axe 43 auquel est suspendu, par une rotule 44 analogue à la rotule 24, le vérin 45 du deuxième étage de compression et un axe 46 d'articulation du bras pendulaire 47 de la masse d'équilibrage dynamique de cet étage et, à sa partie latérale inférieur, l'axe 48 d'articulation de la manivelle 49 de l'embiellage qui est un fléau à deux bras 49a, 49b. A l'extrémité du bras 49a sont articulées par une rotule 50 l'extrémité de la tige 51 du vérin 45 et une bielle 52 dont l'autre extrémité est articulée par une rotule 53 à l'extrémité du bras pendulaire 41 du piston 42. A l'extrémité du bras 49b est articulée une bielle 54 dont l'autre extrémité est articulée à l'extrémité libre du bras pendulaire 47 de la masse d'équilibrage. En ce même point est d'autre part articulée la tige 55 d'un vérin de poussée 56 dont l'autre extrémité est articulée en 58 sur le bâti.

L'ensemble de bâti 11 porte, d'autre part, un axe latéral 60 perpendiculaire à son orientation et situé à sa partie basse. Sur cet axe 60 est articulé un bras 61 qui est recourbé quatre fois à l'angle droit comme illustré à la figure 4 de manière à passer en-dessous de la chambre de compression du deuxième étage et à venir porter par en-dessous un plateau d'éjecteur 62 qui se trouve logé dans une fenêtre au fond de la paroi inférieure de la chambre de compression du deuxième étage et qui peut être relevé par le bras 61 pour pénétrer dans cette chambre et éjecter le bloc de paille comprimé au fond de ladite chambre. Le bras 61 et le plateau 62 sont rappelés en position basse par un ressort 63. Leur entraînement est assuré par un bras 64 calé sur l'arbre 20 et entraîné avec le piston de compression 22 du premier étage. A l'extrémité du bras 64 est articulée une bielle télescopique 65. Cette bielle télescopique 65 comporte (Fig. 7.) une tige 66 qui coulisse dans un fût 67. A son extrémité la tige 66 porte un galet 68 dont l'axe passe dans une fente 69 du fût. Sur le boîtier de tête 70 du fût est monté basculant un doigt de came 71 qui vient se placer au droit de la fente 69 en-dessous du galet 68. Le basculement de la came 71 est assuré par une biellette 72 dont l'extrémité opposée à la came est engagée dans une fenêtre 73 d'un flasque 74 solidaire du bras 64. Cette extrémité de la biellette 72 se déplace dans la fenêtre 73 lorsque l'angle entre le bras 64 et la bielle télescopique 65 varie entre un maximum correspondant au recul complet du piston 22 de compression du premier étage et une valeur correspondant à un angle donné d'avance de ce piston. Pendant cette course du piston de compression du premier étage, le galet 68 sera maintenu par la came 71 et le plateau 62 sera relevé pour assurer l'éjection mais, dès que l'angle prévu sera dépassé, la came 71 libére le galet 68 et le bras 61 et le plateau 62 retombent.

Le chargement de la paille depuis le plateau, où elle a été amenée par un pick-up et une vis de tous types connus, dans la chambre de compression du premier étage est assuré par dispositif comprenant un certain nombre de dents rigides 80 réunies à leur extrémité supérieure par une traverse 81 solidaire d'un bras en T 82. (Voir figure 8). L'extrémité arrière du bras 82 est articulée par un axe 83 à l'extrémité d'un bras pendulaire 84 fixé par un axe 85 dans le bâti, cet axe étant parallèle à l'orientation de l'élément de bâti 10. L'entrainement de ce dispositif est assuré par une bielle oblique 86 solidarisée par rotulage en 87 avec un point intermédiaire du bras pendulaire 84 et en 88 avec un point intermédiaire du bras pendulaire 21 du piston 22. A une de ses extrémités la traverse 81 porte un galet 89 qui coopère avec un chemin de came 90 représenté en pointillé à la figure 4. Comme illustré à la figure 8., ce chemin de came comporte un canal supérieur 91 et une surface de came inférieure 92. La sortie du galet 89 du canal 91 qu'il parcourt selon une direction ascendante vers l'arrière et son renvoi sur la surface de came 92 sont assurés par un aiguillage unidirectionnel constitué par un volet 93 articulé autour d'un axe horizontal et rappelé en appui par son bord libre contre la paroi supérieure du canal 91 par un ressort 94. Un ressort 95 sollicite le galet 89 pour le maintenir en contact avec les surfaces actives du chemin de came 90. Lorsque le piston de compression 22 du premier étage décrit sa course de compression vers l'avant, le bras 84 est basculé en étant relevé et le galet 89 décrit la trajectoire définie par le canal 91 de sorte que les dents 80 sont relevées et ramenées en arrière derrière la paille amenée sur le plateau. Lorsqu'au contraire le piston de compression 22 du premier étage se dégage en revenant vers l'arrière, la biellette 86 fait osciller le bras 84 et le galet 89 décrivant la surface de came 92 fait redescendre les dents 80 en appui sur le plateau et les ramène vers l'avant en direction de la trajectoire du piston de compression 22 de manière à comprimer la paille dans la chambre de compression du premier étage.

Les figures 5 et 6 sont données à titre illustratif et on y retrouve les mêmes éléments désignés par les mêmes références. On notera toutefois de plus les masses d'équilibrage 35 du premier étage et 59 du deuxième étage et la forme du piston 42 du deuxième étage de compression qui comporte une paroi radiale 42a et une paroi supérieure courbe 42b qui forme la paroi supérieure de la chambre de compression du deuxième étage, chambre dans laquelle la paille est comprimée par le piston 22 du premier étage à travers une fenêtre 42a. On n'a pas représenté les parois de la chambre de compression du premier étage, leur structure se déduisant immédiatement de la forme du piston de compression 22, du fait que le piston 22 oscille autour de l'arbre 20 et du fait que la paille est chargée par les dents 80 dans le sens de la flèche F (figure 5). Elles comportent deux parois en secteurs cylindriques centrées sur l'axe 20, s'adaptant au-dessus et au-dessous des secteurs cylindriques du piston 22 et se terminant le long des bords supérieur et inférieur de la fenêtre 42c, et de deux parois radiales réunissant les deux parois susdites pour former un canal, celle en face de la flèche F présentant une fenêtre devant laquelle viennent s'appliquer les dents 80.

La réalisation des rotules 24 et 44 de fixation des vérins 25 et 45 sur leurs axes 23 et 43 est illustrée plus en détail dans les figures 9 et 10. L'arbre 23-43 est monté dans le bâti par des roulements à rouleaux 100. Cet arbre est percé par un canal 101 se terminant à l'une des extrémités de l'arbre par un raccord tournant 102. En son centre l'arbre est percé radialement par un canal 103 débouchant dans le canal 101. Autour du débouché du canal 103 l'arbre est usiné pour réaliser une portée plane 104 avec au centre une portée tubulaire 105 entourant le débouché du canal 103. Sur ces deux portées 104 et 105 vient s'adapter une pièce en calotte sphérique 106, l'étanchéité étant assurée par un joint 107. Sur cette calotte sphérique prend appui une bague de frottement 108 comportant sur sa face au contact un évidement de même sphéricité avec un joint d'étanchéité 109. Cette bague est logée dans un chambrage de la pièce 110 constituant la tête du corps 111 du vérin en y étant maintenue par une bague 112. La bague 108 et la tête de vérin 110 comportent des alésages axiaux mettant en communication le canal 103 avec la chambre du corps 111 du vérin. Des joints assurent les étanchéités entre les diverses pièces. Le montage du vérin sur l'axe est complété par deux portées planes sécantes opposées 113 réalisées sur l'arbre, portées sur lesquelles viennent prendre appui en y étant fixées par des vis 114 des semelles 115 dans chacune desquelles est engagé un bout d'arbre 116 dont l'axe passe par le centre de la calotte sphérique 106. Sur chacun des bouts d'arbre 116 est montée par un roulement 117 une boîte à roulement 118 comportant deux alésages parallèles perpendiculaires à l'axe du roulement et disposés de part et d'autre des tirants filetés 119 passant dans ces alésages et dans des trous alignés d'un plateau 120 de la tête de vérin 110 avec des écrous 121 pour régler et équilibrer le serrage de la tête de vérin sur la calotte sphérique 106.

Avec ce montage le vérin peut tourner autour de l'axe de l'arbre 23-43 et tourner autour de l'axe des bouts d'arbre 116 qui est perpendiculaire à l'arbre 23-43 ce qui assure une fixation à rotule du vérin avec un angle de débattement suffisant. L'alimentation du vérin qui agit essentiellement à la compression est également assurée d'une manière simple à travers les moyens mécaniques assurant sa suspension. Les vérins 25 , 45 et 56 sont des vérins à récupération d'énergie. Plus exactement les vérins assurent la transmission au dispositif oscillant des forces de rappel aux points morts assurées par les ressorts 2a et 2b dans la figure 1. Comme illustré à la figure 11, la chambre de ces vérins qui n'est pas soumise à la haute pression est en communication avec un accumulateur hydropneumatique respectivement 123 , 124 et 125 qui joue le rôle des ressorts 2a et 2b de la figure 1. Chaque accumulateur hydropneumatique est muni d'une soupape de sécurité tarée 126, d'une vanne tiroir électromagnétique 127 pouvant mettre la chambre et l'accumulateur à l'échappement lors de l'arrêt complet de la machine et d'une soupape unidirectionnelle 128a contrôlant la communication avec une source de gavage 128b.

Le circuit hydraulique comporte deux pompes 129a , 129b refoulant dans des canalisations haute-pression 130a , 130b , ces canalisations pouvant être interconnectées par une vanne 131 contrôlée hydrauliquement montée sur la canalisation de liaison 132. La chambre de pression de cette vanne est mise en communication avec la haute pression ou l'échappement par une vanne électromagnétique 133. La référence 134 désigne la canalisation basse-pression de retour.

La chambre de travail, opposée à la chambre reliée à l'accumulateur hydropneumatique du vérin 25 du premier étage est mise en communication avec la canalisation 130b ou avec la canalisation 134 par des vannes à commande hydraulique 135 et 136 respectivement, la mise en pression ou à l'échappement des chambres de pression des vannes 135 et 136 étant commandée par des vannes électromagnétique 137 et 138. La chambre de travail opposée à la chambre reliée à l'accumulateur hydropneumatique du vérin 45 est mise en communication avec la canalisation 130b par une vanne à commande hydraulique 139 contrôlée par une vanne électromagnétique 140 et avec la canalisation 134 par une vanne à commande hydraulique 141 contrôlée par des vannes électromagnétiques 142 et 143. La vanne électromagnétique 140 met la chambre de pression de la vanne hydraulique 139 en communication soit avec la canalisation 130b ou le vérin 45, soit avec l'échappement. La vanne électromagnétique 143 met la chambre de pression de la vanne 141 en communication avec la chambre de travail du vérin 45 ou, par l'intermédiaire de la vanne électromagnétique 142 avec l'échappement ou avec la canalisation 134. La chambre de travail, opposée à la chambre reliée à l'accumulateur hydropneumatique, du vérin 56 est mise en communication soit avec la canalisation 130a soit avec la canalisation 134 par deux vannes à commande hydraulique 144 et 145 dont les chambres de pression peuvent être mises en pression ou à l'échappement par des vannes électromagnétiques 146 et 147. Deux vannes à commande hydraulique 148a et 148b commandées par des vannes électromagnétiques 149a , 149b qui mettent leurs chambres de pression en communication avec les canalisations 130a et 130b ou 134 ou avec l'échappement, contrôlent la mise en communication des canalisations 130a et 130b avec la canalisation 134 qui est reliée à l'aspiration des pompes 129a , 129b par des refroidisseurs 150 et avec un accumulateur basse pression 151. L'accumulateur basse-pression 151 est en communication par une soupape unidirectionnelle 152 avec une pompe de gavage 153 accouplée à ses propres accumulateur et soupape de sécurité. Les références 154 désignent des soupapes de sécurité branchées sur les canalisations haute pression 130a , 130b et sur la canalisation basse pression 134 et les références 155 des soupapes de sécurité limitant la pression dans les chambres de travail des vérins.

Partant de la position du point mort de retour du premier étage (vérin 25) pour laquelle l'accumulateur 123 est sous pression,les vannes 148a , 148b sont ouvertes et les vannes 135 , 136 et 141 sont fermées. La vanne électromagnétique 138 commandant la vanne 136 est basculée pour mettre sa chambre de pression à l'échappement. Sous la poussée de la pression régnant dans la chambre de travail du vérin 25 créée par l'accumulateur hydropneumatique 123, la vanne 136 s'ouvre et met ladite chambre du vérin 25 en communication avec la canalisation 134. Le vérin 25 se raccourcissant ramène le vérin 25 et la manivelle 29a, cette position étant dépassée sous l'effet de l'énergie cinétique. Pendant ce mouvement les vannes électromagnétiques 149a , 149b et 133 sont actionnées pour fermer les vannes 148a , 148b et ouvrir la vanne 131, la chambre de pression de cette dernière étant mise à l'échappement. On commande simultanément la vanne électromagnétique 137 pour mettre à l'échappement la chambre de pression de la vanne 135 qui s'ouvre, les deux pompes 129a et 129b débitant en parallèle par la canalisation 130b dans la chambre de pression du vérin 25. La vanne électromagnétique 138 est inversée pour mettre la chambre de pression de la vanne 136 en communication avec la chambre de travail du vérin 25 mais tant que cette pression reste inférieure à la basse pression du fait de l'énergie cinétique de l'ensemble oscillant du premier étage, la vanne 136 reste ouverte pour continuer le gavage de la chambre de pression, le débit dans cette vanne 136 s'étant inversé. Lorsque la pression dans la chambre de travail du vérin 25 devient, comme exposé ci-dessus avec référence aux figures 1 à 3, plus élevée et ferme la vanne à commande hydraulique 136. La fin de la compression du premier étage est assurée par les pompes 129a et 129b débitant dans le vérin 25, l'accumulateur 123 étant simultanément remis en pression. L'arrêt du mouvement de compression est obtenu en commutant la vanne électromagnétique 137 et en ouvrant l'une des vannes 148a ou 148b par mise de sa chambre de pression à l'échappement. La pression dans la canalisation 130b devient inférieure à la pression dans la chambre de travail du vérin 25 qui est en communication préférentielle, du fait de la soupape unidirectionnelle 156, avec la chambre de pression de la vanne 135 qui se ferme. Le mouvement de retour du premier étage s'effectue exactement par le même processus à l'exception du fait que la montée en pression en fin de course dans la chambre du vérin 25 est due à la mise en pression de l'accumulateur hydropneumatique 123 et non à celle-ci et à la compression de la paille.

Le fonctionnement du deuxième étage, c'est-à-dire la commande du vérin 45, est analogue à celui du premier étage mais lors de la compression c'est la pression maximale obtenue sur la paille qui commande la fermeture de la vanne hydraulique 139 et l'ouverture de la vanne 141 au lieu d'une commande positive liée à la position de point mort de la manivelle 49a. Lors de la phase de retour les vannes électromagnétique 142 et 143 sont commutées pour mettre la chambre de pression de la vanne 141 en communication avec la basse pression de la canalisation 134 et non avec la chambre de travail du vérin 45 de sorte que la vanne 141 reste fermée et le vérin 45 cavite vers son point mort bas, ce qui réduit le volume d'huile transféré dans le vérin 45. Le regonflage de l'accumulateur hydropneumatique 124 contre la cavitation du vérin 45 est assuré par le vérin 56, la vanne 145 étant fermée et la vanne 146 étant ouverte. La vanne électromagnétique 147 est commutée pour ouvrir la vanne 145 pendant la phase de compression pour maintenir le vérin 56 hors d'action. En outre pendant la phase de retour des deux étages, retours qui s'effectuent simultanément, la vanne 131 est fermée, la pompe 129b alimentant le vérin 25 et la pompe 129a alimentant le vérin 56 tandis que le vérin 45 cavite.

Le mode de réalisation de l'étage de compression représenté à la figure 12 comporte une transmission hydraulique et non plus par des embiellages mécaniques tels que 29b-34 ou 49b-54 entre la partie assurant la compression et la masse d'équilibrage. De plus, les mouvements de translation sont rectilignes et non plus pendulaires. Dans cette figure la référence 160 désigne la chambre de compression de l'étage, la référence 161 le piston assurant la deuxième compression de la masse de paille comprimée par le piston 162 du premier étage, la référence 163 le piston du vérin 164 entraînant ce piston, les références 165 et 166 respectivement la chambre de travail et la chambre en communication avec l'accumulateur hydropneumatique 167 de ce vérin, 168 est la masse d'équilibrage dynamique constituée par le piston d'un vérin 169, 170 la chambre de travail de ce vérin et 171 la chambre en communication avec l'accumulateur hydropneumatique 172, 173 est la tige de détection de la position de la masse d'équilibrage 168 laquelle coopère avec un détecteur de point mort 174, 175 désigne la pompe d'alimentation dont le sens du débit et la cylindrée sont commandés par un asservissement 176, 177 désigne une vanne à commande hydraulique dont le clapet formant piston est désigné par 178 et 179 une vanne électromagnétique qui met la chambre de pression 180 de la vanne 177 en communication avec les chambres 165 ou 170 ou avec l'échappement à la bâche 181.

Le fonctionnement de la presse à système oscillant avec transmission hydraulique ci-dessus décrite est le suivant en partant de la position illustrée à la figure 12.

Le piston 162 de la presse se trouve à sa position de recul maximum et la paille est alimentée dans la chambre 160. Le piston 163 du vérin 164 est à son point mort arrière, l'accumulateur 167 étant à la pression minimale. Le piston d'équilibrage 168 du vérin 169 est également à son point mort arrière, sa chambre 171 étant en communication avec l'accumulateur hydropneumatique 172 à la pression maximale. Le détecteur 174 détecte le point mort arrière et commande le distributeur 179 qui met la chambre 180 de la vanne à cartouche 177 à la bâche. La pression dans la chambre 170 du vérin 169 s'exerçant sous le clapet 178 de la vanne 177 ouvre celle-ci et la chambre 170 est alors en communication directe avec la chambre 165 ce qui amorce la course active sous l'action de l'accumulateur hydropneumatique 172. En même temps, la pompe 175 est inversée pour débiter à débit maximum dans la chambre 165. Le distributeur 169 est commandé sensiblement au moment où les pressions dans les accumulateurs 167 et 172 sont équilibrées pour mettre la chambre 180 de la vanne à cartouche 177 en communication avec la chambre 165 du vérin 164. Du fait de l'énergie cinétique de l'ensemble la pression dans la chambre 165 reste inférieure à la pression dans la chambre 170, la pompe 175 continue à débiter sans pression et le piston 178 reste dans la position ouverte. La pompe qui ne fournissait qu'une partie du débit en parallèle avec 177 tend à fournir seule le débit au vérin 164, la force de compression de la paille ralentissant le mouvement. La vitesse du piston 163 du vérin 164 est alors imposée par le débit de la pompe 175. La pression dans la chambre 165 dépasse celle dans la chambre 170 et la vanne à cartouche 180 se ferme. La compression de la paille s'effectue alors sous l'action du débit de la pompe qui peut être réduit jusqu'à obtention de la pression de compression recherchée si la pompe 175 est à débit variable. L'accumulateur 167 est alors à sa pression maximale et l'accumulateur 172 à sa pression minimale.

La course de retour est amorcée en amenant le distributeur 179 dans la position mettant à la bâche la chambre 180 de la vanne à cartouche 177. La pression de la chambre 165 égale à la pression dans l'accumulateur 167, augmentée de la force de retour élastique de la paille comprimée, soulève le clapet 178 et la pression dans la chambre 165 établit un débit vers la chambre 170 du vérin 169, la vitesse et l'énergie cinétique du dispositif augmentant progressivement. Sensiblement au moment où les pressions dans les accumulateurs 172 et 167 sont équilibrées, le distributeur 169 est commandé pour mettre la chambre 180 de la vanne à cartouche 177 en communication avec la chambre 170 du vérin 169. Du fait de l'énergie cinétique de l'ensemble la pression dans la chambre 170 reste inférieure à la pression dans la chambre 165. Lorsque ce rapport s'inverse la vanne à cartouche 180 se ferme. La montée en pression de l'accumulateur hydropneumatique 172 s' effectue alors sous l'action du débit de la pompe 175 jusqu'à ce que le point mort de retour soit atteint ce qui est détecté par le détecteur 174. Il est à noter qu'un temps d'arrêt à ce point mort peut être obtenu si le débit de la pompe est annulé et si la mise en communication de la chambre 180 de la vanne à cartouche 177 est asservie à une autre commande.

Revendications

1. Un procédé pour entretenir le mouvement d'oscillation d'un dispositif oscillant avec une source motrice fournissant une force supérieure à la force potentielle du dispositif oscillant au droit de ses points morts, la vitesse d'application de cette force étant inférieure à la vitesse du système oscillant dans la région entourant son point d'équilibre, caractérisé en ce qu'on applique la force de la source motrice au dispositif oscillant sur la partie de la trajectoire de ce dispositif oscillant précédant un point mort pour laquelle la vitesse d'application de la force de la source motrice est supérieure à la vitesse instantanée du dispositif oscillant.

2. Un procédé selon la revendication 1, caractérisé en ce que la source motrice est mise hors d'action lorsque le dispositif oscillant atteint le point mort considéré.

3. Un procédé selon la revendication 1, caractérisé en ce que la source motrice est mise hors d'action lorsque la force motrice qu'elle exerce sur le dispositif oscillant atteint une valeur prédéterminée.

4. Un procédé selon l'une quelconque des revendications 1 à 3, caractérisé en ce que le dispositif oscillant est piloté en fréquence, l'inversion de sens de la force exercée par la source motrice au droit d'un point mort, l'inversion comprenant l'annulation de cette force, étant effectuée à une fréquence inférieure à la fréquence naturelle d'oscillation du dispositif.

5. Un dispositif oscillant à force d'entretien du mouvement oscillant par fluide hydraulique sous pression, l'entretien étant effectué par le procédé selon l'une quelconque des revendications 1 à 4, caractérisé en ce que la masse oscillante qui peut être une

2     0042315

masse pendulaire ou une masse interposée entre deux éléments élastiques agissant en opposition, est associée rigidement avec des récepteurs de puissance hydrauliques tels que deux vérins hydrauliques ou un moyen équivalent tel qu'un vérin double effet, susceptibles d'exercer sur cette masse une poussée la ramenant vers chacun de ses points morts, supérieure à la force résistante qui lui est opposée, ces vérins étant mis sélectivement en communication contrôlée avec une source de fluide non compressible sous pression et pouvant aspirer avec un débit assurant leur gavage à la vitesse maximale de leur déplacement de volume instantané à partir d'une source du même fluide, et on alimente sélectivement celui des récepteurs exerçant une poussée vers le point mort terminal de l'oscillation en cours.

6. Un procédé selon l'une quelconque des revendications 1 à 4, caractérisé en ce qu'au moins une partie de la force de rappel du dispositif oscillant est fournie par un moyen élastique bandé au moins pour partie par le dispositif d'entretien de l'oscillation.

7. Un procédé selon la revendication 6, caractérisé en ce que la capacité d'emmagasinage d'énergie du moyen élastique est supérieure à l'énergie cinétique du dispositif oscillant.

8. Un dispositif oscillant selon la revendication 5 comportant application du procédé selon l'une quelconque des revendications 6 et 7, caractérisé en ce qu'au moins une partie de l'énergie cinétique du dispositif oscillant est absorbée, au moins en fin d'oscillation dudit dispositif, et restituée dans la partie initiale de l'oscillation suivante par un ressort qui est de préférence constitué par un récepteur hydropneumatique.

9. Une presse notamment une presse à paille comportant un piston animé d'un mouvement alternatif oscillant mettant en oeuvre le procédé selon l'une quelconque des revendications 1 à 4 et 6 et 7,

caractérisée en ce que la phase initiale du travail de compression est assurée par l'énergie potentielle emmagasinée au cours de la course de recul du piston de la presse dans un accumulateur élastique et restituée sa forme d'énergie cinétique au dispositif oscillant, la phase finale du travail de compression étant assurée par un dispositif d'entraînement assurant une force de poussée élevée à vitesse d'application réduite.

10. Une presse selon la revendication 9, caractérisée en ce qu'un accumulateur élastique est bandé en fin de course de compression par le dispositif d'entraînement assurant une force de poussée élevée à vitesse d'application réduite, l'énergie emmagasinée dans cet accumulateur élastique étant restituée au dispositif mécanique pendant la course de recul.

11. Une presse selon la revendication 10, caractérisée en ce que l'énergie résiduelle en fin de course de recul est emmagasinée avec addition éventuelle d'une énergie supplémentaire fournie par le dispositif d'entraînement dans un accumulateur élastique bandé en fin de course de recul, l'énergie emmagasinée dans cet accumulateur élastique étant restituée au dispositif mécanique pendant la course de compression.

12. Une presse selon l'une quelconque des revendications 9 à 11, caractérisée en ce que la masse du piston et des éléments associés est équilibrée par une masse d'équilibrage dont le déplacement est lié à celui de la masse du piston par une transmission non élastique de façon que les barycentres du piston et des éléments associés, d'une part, et de la masse d'équilibrage, d'autre part, donnent un barycentre de l'ensemble qui est sensiblement fixe.

13. Une presse à deux étages de compression du type à deux stades de compression selon deux directions sensiblement perpendiculaires comportant comme éléments principaux un bâti porteur automoteur ou tractable, un dispositif de ramassage de la paille et d'alimentation de la paille à la presse proprement dite, une presse proprement dite du type à deux stades de compression selon deux directions sensiblement perpendiculaires et un dispositif éjecteur chaque étage correspondant à une presse selon l'une quelconque des revendications 9 à 12,
caractérisée en ce que chaque élément assurant un stade de compression est constitué par un piston de compression à mouvement pendulaire commandé par un dispositif à deux bielles articulées à genouillère, l'ouverture et la fermeture de la genouillère étant commandées par un vérin hydraulique selon la disposition dite à quatre barres, la commande par le vérin étant du type à accumulation et restitution de l'énergie, l'articulation centrale de la genouillère dépassant, au cours du retour arrière du piston, la ligne d'axes passant par les deux points fixes d'articulation de la genouillère et du vérin, en emmagasinant l'énergie dans un accumulateur qui la restitue au système dans la partie initiale de la course vers l'avant du piston du vérin.

14. Une presse selon la revendication 13, caractérisée en ce que l'accumulateur est du type hydropneumatique et est en communication avec la chambre opposée à la chambre active du vérin.

15. Une presse selon l'une quelconque des revendications 13 et 14 dans laquelle le dispositif de commande du piston de compression comporte trois points fixes sur le bâti, savoir l'articulation du bras pendulaire portant le piston, l'articulation de l'embiellage à genouillère dont l'articulation opposée est solidaire du bras pendulaire portant le piston et l'articulation du vérin dont l'autre extrémité est articulée sur l'articulation centrale de la genouillère, caractérisée en ce que les positions relatives de l'articulation du vérin et de l'articulation sur le châssis de l'embiellage à genouillère et les longueurs du bras pendulaire et des bielles de l'embiellage à genouillère sont telles qu'en fin de course de compression la ligne d'action du vérin se trouve sensiblement en coïncidence avec la bissectrice de l'angle de la genouillère.

16. Une presse selon l'une quelconque des revendications 13 à 15,
caractériséeen ce que le système de barres constitué par les embiellages et le vérin est isostatique, c'est-à-dire s'auto-positionne, les deux articulations aux extrémités du vérin et l'articulation de la bielle sur le piston étant des articulations à rotule.

17. Une presse selon l'une quelconque des revendications 13 à 16 dans laquelle le vérin de commande cavite dans la partie arrière de sa course,
caractérisée en ce qu'elle comporte un vérin secondaire qui agit sur l'embiellage dans la direction inverse du mouvement assurant la compression pour ramener le système en position d'accumulation maximale d'énergie.

18. Une presse selon l'une quelconque des revendications 13 à 17,
caractérisée en ce que l'équilibrage dynamique de la presse est assuré pour chaque étage de compression par une masse suspendue au bâti de façon pendulaire autour d'un axe parallèle aux axes du système à quatre barres de l'étage de compression et entraînée par un embiellage, à partir de l'embiellage de commande du piston de compression, pour avoir à tout moment une direction de déplacement opposée à la direction de déplacement du barycentre des masses du dispositif de compression de l'étage.

19. Une presse selon la revendication 18,

caractérisée en ce que la masse d'équilibrage est suspendue par un bras pendulaire ayant un axe coplanaire avec l'axe d'articulation du piston de compression et la rotule du vérin, ce bras étant entraîné par une bielle de liaison articulée à l'extrémité d'une manivelle constituée par un prolongement de la manivelle du système de compression.

20. Une presse selon l'une quelconque des revendications 13 à 19, caractérisée en ce que le dispositif d'éjection du bloc comprimé hors de la chambre de compression du deuxième étage de compression est constitué par un plateau venant au repos fermer la paroi inférieure de cette chambre, ce plateau étant porté par un bras monté oscillant autour d'un axe parallèle aux axes d'articulation du deuxième étage de compression, ce bras oscillant étant entraîné dans la direction assurant l'éjection, depuis l'axe d'oscillation du piston du premier étage de compression, par un bras radial solidaire de cet axe dont l'extrémité est reliée au bras oscillant de l'éjecteur par une bielle télescopique dont l'allongement est contrôlé par un système de détente autorisant cet allongement après une première fraction de la course de compression du premier étage, l'éjecteur étant rappelé élastiquement en position de repos avec un allongement concomitant de la bielle télescopique.

21. Une presse selon la revendication 20, caractérisée en ce que la détente est constituée par un galet fixé à l'extrémité de la tige de la bielle et coopérant avec une came d'arrêt solidaire du fût de la bielle, la came étant dégagée par réduction de l'angle entre le bras radial et la bielle télescopique, le réenclenchement s'effectuant en fin de course de retour du piston de compression du premier étage.

22. Une presse selon l'une quelconque des revendications 13 à 21, caractérisée en ce que le dispositif de chargement de la paille dans la chambre de compression du premier étage comprend une paroi mobile déplaçable sur le plateau d'amenée de la paille alimentée sur ce plateau par tout dispositif connu, perpendiculairement à la trajectoire du piston de compression du premier étage, le déplacement de cette paroi mobile étant guidé par une came à aiguillage et assuré par une tige sensiblement parallèle à sa direction de déplacement qui en est rigidement solidaire et par une manivelle articulée autour d'un axe perpendiculaire à cette direction de déplacement, l'entraînement étant assuré par une bielle oblique agissant entre des points intermédiaires de ladite manivelle et du bras du piston de compression du premier étage en coopération avec un dispositif de rappel élastique de la paroi mobile sur la partie supérieure de guidage en retour de la came.

*Fig:1*

*Fig:3*

*Fig. 2*

Fig.4

*Fig.5*

0042315

Fig. 6

0042315

Fig:7

Fig:8

Fig. 9

Fig:10

0042315

Fig.11

*Fig:12*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.³) |
|---|---|---|---|
| | BE - A - 642 866 (RAYMOND) <br> * page 4, paragraphe 2; page 5; page 6; page 7; page 8 * <br><br> -- <br><br> GB - A - 1 142 651 (DOWTY) <br> * page 1, lignes 11-90; page 2, lignes 1-129; figures 1, 2,3 * <br><br> -- <br><br> FR - A - 1 550 930 (KOPPERN) <br> * page 1, colonne de droite, paragraphes 2,3; page 2; figure 1 * <br><br> -- -- -- | 1 <br><br><br><br><br> 1 <br><br><br><br><br><br> 1 | B 06 B 1/18 <br> A 01 F 15/00 |

**DOMAINES TECHNIQUES RECHERCHES (Int. Cl.³)**

A 01 F
B 06 B
B 30 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 07.09.1981 | VERMANDER |

OEB Form 1503.1 06.78